# EUROPEAN PATENT APPLICATION

(11) **EP 4 134 892 A1**
(43) Date of publication of application: **15.02.2023**
(21) Application number: 22179822.6
(22) Date of filing: 20.06.2022
(51) Int. Cl.: G06Q 20/20, G07G 1/00, G07G 1/14

(54) **TRANSACTION PROCESSING SYSTEM, INPUT PROCESSING DEVICE, SETTLEMENT DEVICE AND METHOD**

(30) Priority: 11.08.2021 JP 2021131222
(71) Applicant: Toshiba TEC Kabushiki Kaisha, Tokyo 141-8562 (JP)
(72) Inventor: Inoue, Takeshi, Shinagawa-ku, Tokyo 141-8562 (JP)
(74) Representative: Bandpay & Greuter

(57) **Abstract**

According to one embodiment, a merchandise sales transaction processing system includes a registration processing device to register items being purchased in a transaction, generate settlement information for the transaction based on the registered items, and store the generated settlement information in a storage device. A plurality of settlement devices are associated with the registration processing device. Each settlement device is configured to check for settlement information in the storage device, acquire the settlement information if the settlement information is stored in the storage device and at least one of the settlement devices is available for executing settlement processing based on the settlement information. The settlement device itself executes the settlement processing if it is available or, if it is unavailable, transmits the settlement information to another one of the settlement devices.

## Description

### FIELD

Embodiments described herein relate generally to transaction processing systems including input processing devices and transaction settlement devices.

### BACKGROUND

In recent years, a semi-self-service-type transaction processing system has become known and has been used as a transaction processing system in larger volume stores. The semi-self-service-type transaction processing system includes at least one input processing device that is used to register data of items of merchandise (products) to be bought in a sales transaction and a settlement device that processes payments and the like related to the sales transaction. In such systems, the input processing device can be operated by a store clerk who performs the merchandise registration processes for a customer and a settlement device operated by the customer to perform payment/settlement processing associated with the transaction.

In the semi-self-service-type transaction processing system, since the clerk handles the data input operations associated with the merchandise registration, the time required for merchandise registration can be expected to be shortened as compared to a self-service-type transaction processing system in which the customer performs both the registration and settlement alone. On the other hand, since the customer operates the settlement device in a semi-self-service system, it may still be assumed that the customer (who is typically unfamiliar or less familiar with the operation) takes a somewhat longer time to make the payment than if the clerk was involved in the settlement operation. Therefore, generally, the semi-self-service-type transaction processing system is provided with, for example, two settlement devices for each input processing device. The input processing device thus transmits the information required for settlement of a transaction to one of the multiple possible settlement devices so that the transaction can be settled.

However, if the input processing device transmits information required for settlement to a particular settlement device that cannot perform settlement processing because the settlement device is, for example, in a busy state, there is a concern that the transmission of the information will be wasted or wasteful.

### BRIEF DESCRIPTION OF THE DRAWINGS

FIG. 1 is a schematic diagram of a transaction processing system according to an embodiment.
FIG. 2 is a block diagram of a registration machine.
FIG. 3 is a schematic diagram of a storage section.
FIG. 4 is a schematic diagram illustrating a data structure of settlement information.
FIG. 5 is a block diagram of a checkout machine.
FIG. 6 is a flowchart illustrating a first information processing procedure executed by a processor of a registration machine according to a registration program.
FIG. 7 is a flowchart illustrating a second information processing procedure executed by a processor of a checkout machine according to a settlement program.
FIG. 8 is a flowchart illustrating aspects of a master processing procedure.
FIG. 9 is a flowchart illustrating aspects of a master processing procedure.
FIG. 10 is a flowchart illustrating aspects of a satellite processing procedure.
FIG. 11 is an example of a registration screen displayed on a touch panel of a registration machine.
FIG. 12 is an example of a subtotal screen displayed on a touch panel of a registration machine.
FIG. 13 is an example of a payment method selection screen displayed on a touch panel of a checkout machine.
FIG. 14 is an example of a settlement screen displayed on a touch panel of a checkout machine.

### DETAILED DESCRIPTION

The invention is set out in the appended set of claims.

Certain embodiments provide a technological solution to a problem related to inefficient acquisition and provision of information required for settlement of a transaction. Systems, devices, and methods according to certain embodiments provide improved acquisition and provision of information required for settlement of a transaction.

In general, according to one embodiment, a merchandise sales transaction processing system includes a merchandise registration processing device and a plurality of settlement devices associated with the merchandise registration processing device. The merchandise registration processing device is configured to: register items being purchased in a sales transaction, generate settlement information for the sales transaction based on the registered items, and store the generated settlement information for the sales transaction in a storage device. The settlements devices are each configured to check for settlement information for a sales transaction in the storage device and acquire the settlement information for the sales transaction if the settlement information is stored in the storage device and at least one of the settlement devices is available for executing settlement processing. The settlement device acquiring the settlement information then execute the settlement processing if the settlement device acquiring the settlement information is available, or transmits the acquired settlement information to an available one of the other settlement devices if the settlement device acquiring the settlement information is unavailable.

Hereinafter, certain, non-limiting example embodiments concerning a semi-self-service-type transaction processing system will be described with reference to the drawings.

The semi-self-service-type transaction processing system includes an input processing device and a settlement device. The input processing device is for inputting data regarding merchandise to be bought by a customer and sold by a retail store in a transaction. Each transaction may concern one or more items of merchandise (which may be referred to as products or commodities in some instances) that are registered (recorded) by the input processing device, which is used for registering merchandise sales data. The settlement device is a for acquiring information necessary for settlement of the transaction and otherwise processing the settlement (payment) of the transaction. In the following examples, the input processing device may be referred to as a registration machine, a point-of-sale terminal, or the like and the settlement device may be referred to as a checkout machine, a payment kiosk, or the like.

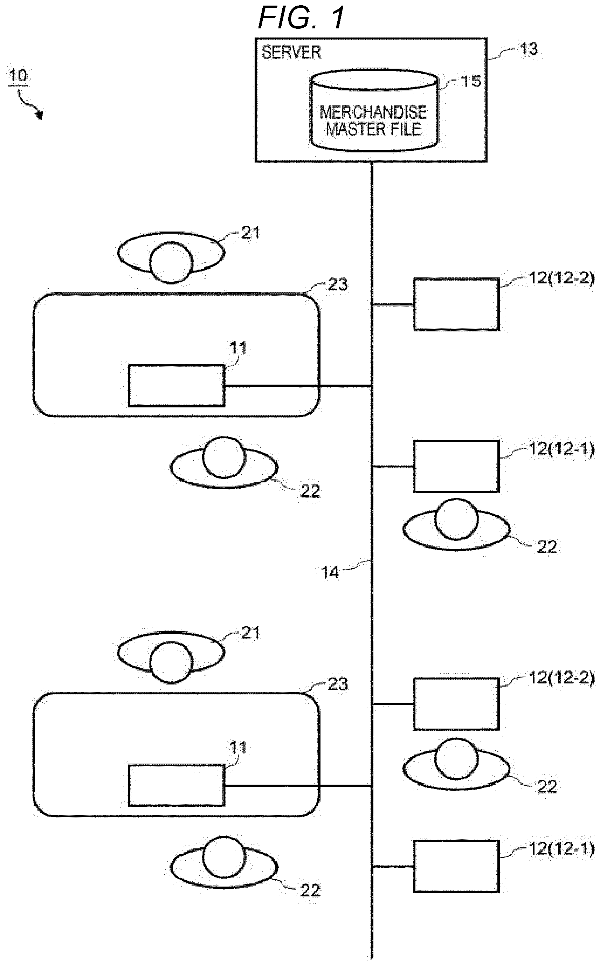

FIG. 1 is a schematic diagram illustrating a schematic configuration of a transaction processing system 10 according to an embodiment. The transaction processing system 10 includes at least one registration machine 11, at least one checkout machine 12, a server 13, and a network 14 connecting these portions. The type of the network 14 is not particularly limited, but a wired or wireless local area network (LAN) is generally applied.

The operator of the registration machine 11 is a clerk 21 who plays a role called a checker. The operator of the checkout machine 12 is a consumer who purchases merchandise at a store. Each consumer is referred to as a customer 22 in the following. The registration machine 11 is attached to a work table 23 in FIG. 1. The work table 23 has a rectangular top plate. By arranging a plurality of the work tables 23 so that longitudinal directions of the top plates are substantially parallel to each other, a passage for the customers 22, a so-called checkout lane, is formed.

A registration machine 11 and at least one checkout machine 12 are arranged for each checkout lane of the store. In general, each checkout lane has one registration machine 11 and a plurality of checkout machines 12. Thus, various data signals are required to be exchanged, through the network 14, between the registration machine 11 and the checkout machine(s) 12 arranged in the same checkout lane. The data signals may be transmitted and received via the server 13 or may be transmitted and received without passing through the server 13.

In FIG. 1, for each of the two checkout lanes, there is one registration machine 11 and two checkout machines 12. For each checkout lane, one checkout machine 12-1 is set as a master machine, and the other checkout machine 12-2 is set as a satellite machine. That is, the master machine 12-1 may be referred to as a first checkout machine, and the satellite machine 12-2 may be referred to as a second checkout machine in some contexts. Aspects related to certain functions of the master machine 12-1 and the satellite machine 12-2 will be clarified in description below.

It is noted that, in the following description, if a checkout machine 12 is being described in a manner in which distinguishing between master machine version or a satellite machine version is unnecessary, the master machine and the satellite machine may each be referred to as a "checkout machine 12", and if the master machine and the satellite machine are being distinguished in some manner from one another, the master machine and the satellite machine are referred to as a "master machine 12-1" and a "satellite machine 12-2", respectively.

The server 13 includes a merchandise master file 15. The merchandise master file 15 may be stored in a storage device built in the server 13 or may be stored in a storage device connected to the server 13 from the outside.

The merchandise master file 15 is a data file for storing a merchandise record generated on a per merchandise item basis for each item to be sold in the store. In this context, a merchandise record is a data record that describes merchandise data such as a merchandise code, a merchandise name, a unit price, and an attribute.

The merchandise code is a unique code set on a per merchandise item basis in order to identify each merchandise type. Generally, each product has a bar code or a two-dimensional code thereon indicating a merchandise code. Alternatively, a radio frequency identification (RFID) tag that stores the merchandise code may be attached to each item. The registration machine 11 can input the merchandise code of the items to be bought in the transaction by reading the barcode, the two-dimensional code, or the RFID tag with a reading device.

The merchandise name and the unit price can be identified by the merchandise code. The attribute is, for example, information related to a tax on the merchandise being purchased. Such attribute information may include a tax rate, a tax type (an exclusive tax, an inclusive tax, a tax free), or the like.

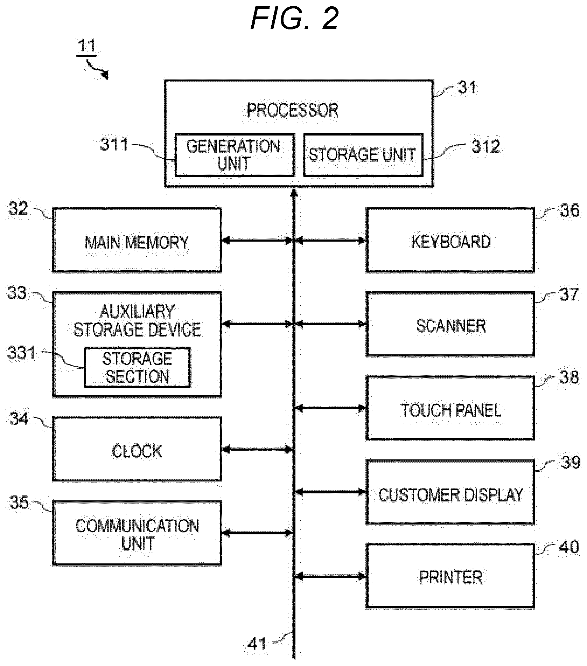

FIG. 2 is a block diagram illustrating a configuration of the registration machine 11. The registration machine 11 includes a processor 31, a main memory 32, an auxiliary storage device 33, a clock 34, a communication unit 35, a keyboard 36, a scanner 37, a touch panel 38, a customer display 39, a printer 40, a system transmission line 41, and the like. The system transmission line 41 includes an address bus, a data bus, a control signal line, and the like. The system transmission line 41 connects the processor 31 and other portions directly or via a signal input and output circuit and transmits data signals exchanged between the processor 31 and the other components.

The registration machine 11 corresponds to a computer including the processor 31 connected to the main memory 32, the auxiliary storage device 33, the clock 34, and the communication unit 35 via the system transmission line 41. Devices such as the keyboard 36, the scanner 37, the touch panel 38, the customer display 39, and the printer 40 can be connected via the system transmission line 41.

The processor 31 corresponds to a central portion of a computer. The processor 31 controls components in order to realize various functions of the registration machine 11 according to an operating system and/or an application program. The processor 31 is, for example, a central processing unit (CPU).

The main memory 32 includes a non-volatile memory area and a volatile memory area. The main memory 32 stores the operating system or the application program in the non-volatile memory area. The main memory 32 may store data required for the processor 31 to execute a control process in the non-volatile or the volatile memory area. The volatile memory area can be used as a work area where data is rewritten as appropriate by the processor 31. The non-volatile memory area is, for example, a read only memory (ROM). The volatile memory area is, for example, a random access memory (RAM).

For example, an electric erasable programmable read-only memory (EEPROM), a hard disk drive (HDD), a solid-state drive (SSD), or the like may be uses as the auxiliary storage device 33. The auxiliary storage device 33 stores data used by the processor 31 for performing various processes, data generated by the processing of the processor 31, and the like. The auxiliary storage device 33 may store an application program.

The clock 34 tracks the date and time. The processor 31 processes the date and time tracked by the clock 34 as the current date and time.

The communication unit 35 performs data communication with the server 13 and the checkout machine 12, which are connected via the network 14. The communication unit 35 can also perform data communication with another registration machine 11 via the network 14.

The keyboard 36 is an input device on which various keys required for inputting data related to merchandise purchased by the customer are arranged.

The scanner 37 is an example of a reading device capable of reading a code symbol, such as a bar code or a two-dimensional code. The scanner 37 may be a type that reads the code symbol by scanning with a laser beam or may be a type that reads the code symbol from an image captured by an imaging device.

The touch panel 38 is a device incorporating both an input device and a display device. The touch panel 38 displays information to the clerk who is an operator of the registration machine 11 and receives an operation input by the clerk.

The customer display 39 displays the information to the customer 22 for whom the data of the purchased merchandise is being registered at the registration machine 11.

The printer 40 dispenses a receipt by printing various character strings, images, or the like on the receipt paper. As this type of the printer 40, a thermal printer, a dot impact printer, or the like can be used.

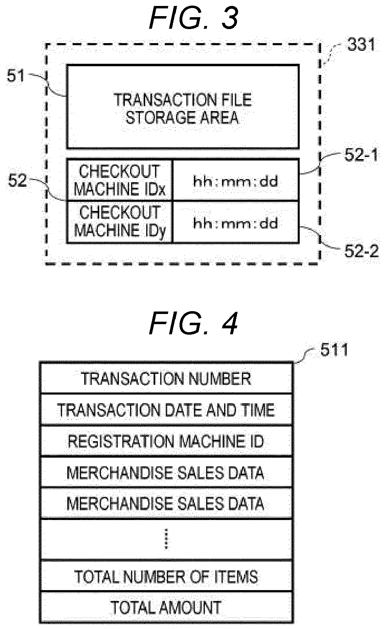

As the hardware of registration machine 11 an standard POS terminal can be used as a basis. It is noted that the devices connected to the registration machine 11 is not limited to the keyboard 36, the scanner 37, the touch panel 38, the customer display 39, and the printer 40 illustrated in FIG. 3. Other devices related to the purposes of the registration machine 11 may be added, or some devices may be omitted.

The registration machine 11 sets a portion of the storage area of the auxiliary storage device 33 as a storage section 331. FIG. 3 is a schematic diagram illustrating the configuration of the storage section 331. As illustrated in the diagram, the storage section 331 has a transaction file storage area 51 and an operation information recording area 52. The transaction file storage area 51 is an area for temporarily storing the transaction file generated by the registration machine 11. The transaction file is a data file describing settlement information 511 (refer to FIG. 4) required for settlement of the transaction.

FIG. 4 is a schematic diagram illustrating a data structure of the settlement information 511. As illustrated in the diagram, the settlement information 511 includes items such as a transaction number, a transaction date and time, a registration machine ID, merchandise sales data, a total number of items, and a total amount. The transaction number is a serial number issued for each transaction in order to individually identify the transaction being performed with the particular customer 22. The transaction date and time is a date and time when the transaction is performed. The registration machine ID is identification information set in the particular registration machine 11 that processes the transaction. A unique registration machine ID is set in advance in each registration machine 11. The merchandise sales data includes items such as the merchandise code, the merchandise name, the unit price, number of items sold, the sales amount, and the attributes of the merchandise purchased by the customer 22. The settlement information 511 includes the merchandise sales data of all the items being purchased by the customer 22 in the transaction. Further, the data structure of the settlement information 511 is not limited to the data structure illustrated in FIG. 4. Other items or details may be added, or some items or details may be omitted.

The operation information recording area 52 is an area for each of the checkout machines 12 installed in the same checkout lane with the particular registration machine 11 to periodically record operation information. A unique checkout machine ID is set in each checkout machine 12. For example, "IDx" is set as the checkout machine ID for the master machine 12-1, and "IDy" is set as the checkout machine ID for the satellite machine 12-2. The operation information recording area 52 is classified according to the checkout machine ID, for example, in the master machine 12-1, the operation information is recorded in the operation information recording area 52-1 for the checkout machine IDx, and in the satellite machine 12-2, the operation information is recorded in the operation information recording area 52-2 for the checkout machine IDy. The operation information is information indicating that the checkout machine 12 is operating or not, or what operating state the checkout machine 12 is presently in. In the present embodiment, current time information is used for the operation information.

In the registration machine 11 having such a configuration, the processor 31 has a function as a generation unit 311 and a storage unit 312. The generation unit 311 provides a function of generating the settlement information 511 required for settlement of a transaction based on the data related to the merchandise input via the reading device or the input device. The storage unit 312 provides a function of storing the transaction file describing the settlement information 511 in the transaction file storage area 51 of the storage section 331.

Both of these functions (the generation unit 311 and the storage unit 312) are realized by the first information processing executed by the processor 31 according to a registration program. The first information processing will be described below. The registration program is a kind of application program stored in the main memory 32 or the auxiliary storage device 33. The method of installing the registration program in the main memory 32 or the auxiliary storage device 33 is not particularly limited. The registration program can be recorded on a removable recording medium, or the registration program can be distributed by communication via the network 14 and installed in the main memory 32 or the auxiliary storage device 33. The recording medium may be, for example, a CD-ROM, a memory card, or the like.

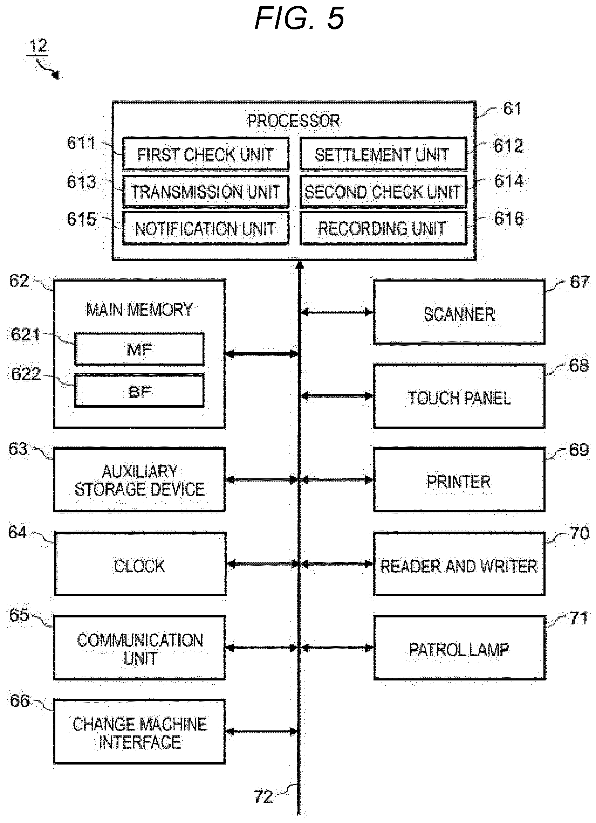

FIG. 5 is a block diagram illustrating a configuration of the checkout machine 12. It is noted that, since the master machine 12-1 and the satellite machine 12-2 have the same circuit configuration, the master machine 12-1 and the satellite machine 12-2 will be described together as a checkout machine 12 without distinction in FIG. 5.

The checkout machine 12 includes a processor 61, a main memory 62, an auxiliary storage device 63, a clock 64, a communication unit 65, a change machine interface 66, a scanner 67, a touch panel 68, a printer 69, a reader and writer 70, a patrol lamp 71, a system transmission line 72, and the like. The system transmission line 72 includes an address bus, a data bus, a control signal line, and the like. The system transmission line 72 connects the processor 61 and other components directly or via a signal input and output circuit, and transmits data signals exchanged between the processor 61 and the other components.

The checkout machine 12 corresponds to a computer including the processor 61 connected the main memory 62, the auxiliary storage device 63, the clock 64, and the communication unit 65 via the system transmission line 72. A device interface or a device such as the change machine interface 66, the scanner 67, the touch panel 68, the printer 69, the reader and writer 70, and the patrol lamp 71 can be connected via the system transmission line 72.

The processor 61 corresponds to a central portion of a computer. The processor 61 controls components in order to provide various functions of the checkout machine 12 according to an operating system and/or an application program. The processor 61 is, for example, a CPU.

The main memory 62 includes a non-volatile memory area and a volatile memory area. The main memory 62 stores an operating system and/or an application program in the non-volatile memory area. The main memory 62 may store data required for the processor 61 to execute a control process in the non-volatile or the volatile memory area. The volatile memory area can be a work area where data is rewritten as appropriate by the processor 61. The non-volatile memory area is, for example, a ROM. The volatile memory area is, for example, a RAM

For example, an EEPROM, a HDD, a SSD, or the like may be used as the auxiliary storage device 63. The auxiliary storage device 63 stores data used by the processor 61 for performing various processes, data generated by the processing of the processor 61, and the like. The auxiliary storage device 63 may store an application program.

The clock 64 tracks the date and time. The processor 61 processes the date and time tracked by the clock 64 as the current date and time.

The communication unit 65 performs data communication with the server 13 or the registration machine 11 connected via the network 14. The communication unit 65 may also perform data communication with another checkout machine 12 connected via the network 14.

The change machine interface 66 provides an interface to an automatic change machine. The change machine interface 66 receives data from the automatic change machine indicating the amount of the money inserted into the automatic change machine. The change machine interface 66 sends data (change data) from the checkout machine 12 to the automatic change machine indicating the amount of change due. The automatic change machine then automatically pays out the money equivalent to the change data as a change due in the transaction.

The scanner 67 is an example of the reading device that reads a code symbol, such as a barcode or a two-dimensional code. The scanner 67 may be a type that reads the code symbol by scanning a laser beam or may be a type that reads the code symbol from an image captured by an imaging device.

The touch panel 68 is a device incorporating both an input device and a display device. The touch panel 68 displays information to the customer 22 who is the operator of the checkout machine 12 and receives the operations input by the customer 22.

The printer 69 dispenses a receipt by printing various character strings, images, or the like on the receipt paper. As this type of the printer 69, for example, a thermal printer, a dot impact printer, or the like can be used.

The reader and writer 70 has a function of reading data recorded on a medium such as a card or a smartphone, and a function of writing data to the medium. The card may include a membership card (called a member card), a loyalty points card, or the like in addition to a settlement card such as a credit card, a debit card, an electronic money card, a prepaid card, or the like. The reader and writer 70 may be any one of a magnetic type device, a contact type device, a non-contact device, and may combine or include a plurality of types of devices having similar purposes.

The patrol lamp 71 has, for example, lamps or lights of two different colors, for example, red and blue. The patrol lamp 71 is provided on the top of a pole erected in the vicinity of the checkout machine 12 in association with the checkout machine 12. Lights/lamps may illuminate, flicker, or flash for example, in red or blue according to the state of the corresponding checkout machine 12.

As the hardware of such a checkout machine 12, for example, a POS terminal for use in a self-service-type (full self-service) transaction processing system, a so-called self-cashier kiosk or terminal can be used as a basis. It is noted that, the devices connected to the checkout machine 12 are not limited to the scanner 67, the touch panel 68, the printer 69, the reader and writer 70, and the patrol lamp 71 illustrated in FIG. 5. Other devices related to the purpose of the checkout machine 12 may be added, or some devices may be omitted.

The checkout machine 12 sets a portion of the storage area of the main memory 62 as a storage area 621 of a mode flag MF and a storage area 622 of a busy flag BF. The mode flag MF is 1-bit data for identifying the operation mode of the checkout machine 12. As the possible operation modes, there are a master mode and a satellite mode. The master mode is an operation mode for executing a master processing. The satellite mode is an operation mode for executing a satellite processing. The master processing and the satellite processing will be described later. The checkout machine 12 set to the master mode becomes the master machine 12-1. The checkout machine 12 set to the satellite mode becomes the satellite machine 12-2. In the present embodiment, the mode flag MF indicating the master mode is set has a value of "1", and the mode flag MF indicating the satellite mode is set has a value of "0".

The busy flag BF is a 1-bit data for identifying whether or not the checkout machine 12 is currently processing a settlement ("busy"). In the present embodiment, the busy flag BF indicating that settlement processing is in progress has a value of "1", and the busy flag BF indicating that settlement processing is not in progress has a value of "0".

In the checkout machine 12, the processor 61 functions (by execution of software or the like) as a first check unit 611, a settlement unit 612, a transmission unit 613, a second check unit 614, a notification unit 615, and a recording unit 616. The first check unit 611, the settlement unit 612, the transmission unit 613, the second check unit 614, and the notification unit 615 are functions of the checkout machine 12 operating in the master mode, that is, as a master machine 12-1. The recording unit 616 is a function of the master machine 12-1 and the checkout machine 12 operating in the satellite mode, that is, the satellite machine 12-2.

The first check unit 611 has a function of checking whether or not the transaction file describing the settlement information 511 is stored in the storage section 331 of the registration machine 11 arranged in the same checkout lane. The settlement unit 612 has a function of acquiring the transaction file from the storage section 331 and executing the settlement processing based on the settlement information 511 described in the transaction file if the transaction file is stored in the storage section 331 and the checkout machine 12 is available (not busy) and capable (operational) of executing the settlement processing. The transmission unit 613 has a function of acquiring the transaction file from the storage section 331 and transmitting the transaction file to satellite machines 12-2 arranged in the same checkout lane, if the transaction file is stored in the storage section 331 but the checkout machine 12 is not available for (or otherwise capable of) executing the settlement processing. The second check unit 614 has a function of checking whether the satellite machine(s) 12-2 arranged in the same checkout lane are capable of executing the settlement processing. The notification unit 615 has a function of notifying the registration machine 11 that the settlement processing cannot be executed if both the master machine 12-1 and the satellite machine 12-2 are not available for executing the settlement processing.

The recording unit 616 has a function of periodically recording operation information into the operation information recording area 52 of the registration machine 11 indicating whether the device including the recording unit 626 is presently operating (present operation state). The operation information is, for example, the current time (hh; mm; ss/hour, minute, second) tracked by the clock 64. The master machine 12-1 records the current time into an operation information recording area 52-1 at regular time periods. The satellite machine 12-2 records the current time into an operation information recording area 52-2 at regular time periods. That is, in the operation information recording area 52-1, the master machine 12-1 updates the recorded time at regular time periods. In the operation information recording area 52-2, the satellite machine 12-2 updates the recorded time at regular time periods.

All the functions of the first check unit 611, the settlement unit 612, the transmission unit 613, the second check unit 614, the notification unit 615, and the recording unit 616 are realized by the second information processing executed by the processor 61 according to the settlement program. The second information processing will be described below. The settlement program is a kind of application program stored in the main memory 62 or the auxiliary storage device 63. The method of installing the settlement program in the main memory 62 or the auxiliary storage device 63 is not particularly limited. The settlement program can be recorded on a removable recording medium, or the settlement program can be distributed by communication via the network 14 and installed in the main memory 62 or the auxiliary storage device 63.

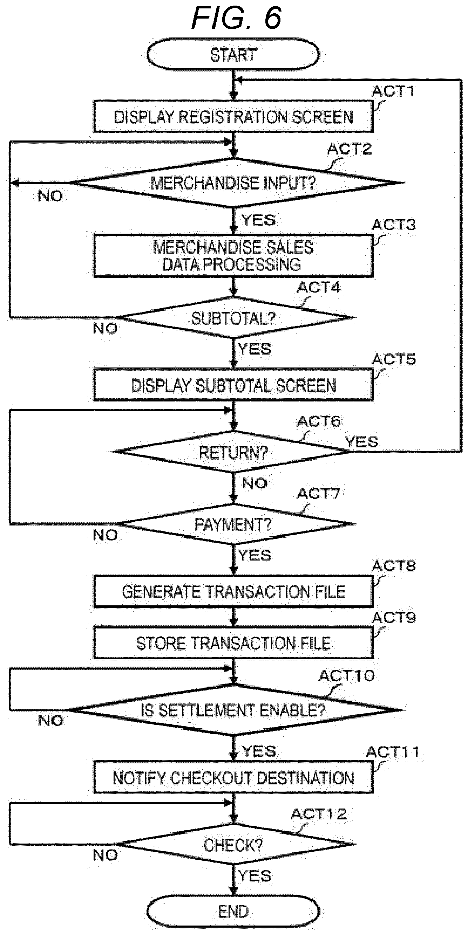

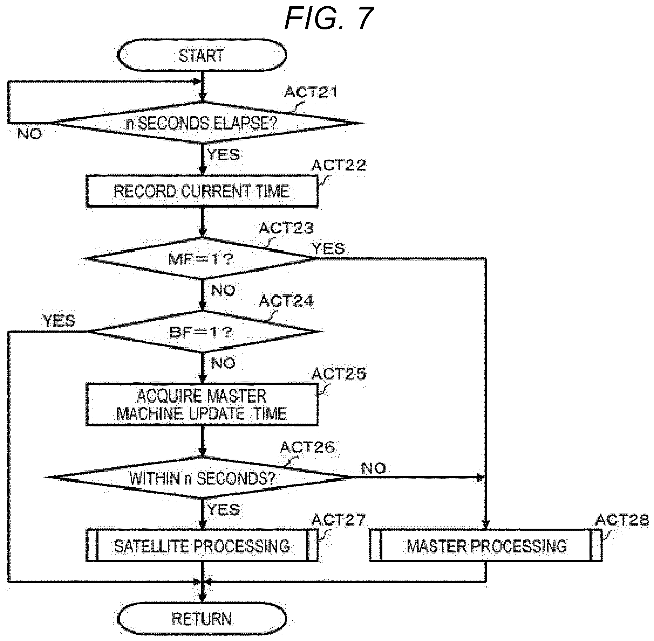

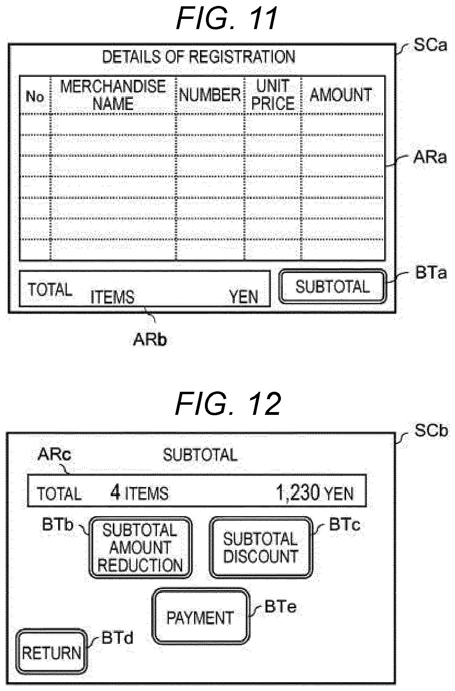

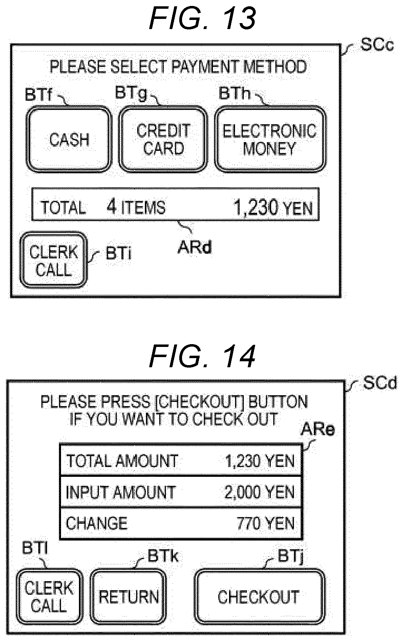

FIG. 6 is a flowchart illustrating a first information processing procedure executed by the processor 31 of the registration machine 11 according to the registration program. FIGS.7 to 10 are flowcharts illustrating a second information processing procedure executed by the processor 61 of the checkout machine 12 according to the settlement program. In addition, FIGS. 11 and 12 are examples of screens displayed on the touch panel 38 (or a display device of the registration machine 11), and FIGS. 13 and 14 are examples of screens displayed on the touch panel 68 (or a display device of the checkout machine 12). Hereinafter, the operations of the transaction processing system 10 will be described. It is noted that the specific operations described below are examples. If the same effects can be obtained, the procedure or the content of the example processing can be changed as appropriate.

First, the customer 22 selects the merchandise to be purchased from the products displayed on the sales floor then places these items into a shopping basket or the like and heads for a check-out lane. When the customer 22 arrives at the checkout lane, the clerk 21 (playing the role of the checker) performs an operation of declaring the start of registration to the registration machine 11. By this operation, the registration program of the registration machine 11 is activated and the processor 31 starts the first information processing illustrated in the flowchart of FIG. 6.

The processor 31 causes the touch panel 38 to display a registration screen SCa (refer to FIG. 11) as ACT 1.

FIG. 11 is an example of the registration screen SCa. The registration screen SCa is a screen in which a detail area ARa and a total area ARb are arranged, and an icon of a subtotal button BTa is further arranged. The detail area ARa is an area for displaying a merchandise name, a number, a unit price, and an amount in a list format in the order acquired in the registration. It is noted that the information displayed in the detail area ARa is not limited to the merchandise name, the number, the unit price, and the amount. Other items of information may be added, or any particular detail of information, for example, the amount, may be omitted. The total area ARb is an area for displaying the total number (items) and the total amount (yen) displayed in the detail area ARa. It is noted that the items of information displayed in the total area ARb are not limited to the total number and the total amount. Other information may be added, or any detail, for example, the total number, may be omitted. The subtotal button BTa is an operator that can be selected by the clerk 21 (by touch or otherwise) to instruct (request) the subtotal output for the merchandise being purchased by the customer 22.

Returning to FIG. 6, the processor 31 controlling the display of the registration screen SCa waits for data related to the merchandise to be input as ACT 2. The barcodes indicating the merchandise codes are attached to the items of merchandise. Therefore, the clerk 21 operates the scanner 37 to read the attached barcodes for the customer 22. After the barcode is read by the scanner 37, the merchandise code for the item is input to the registration machine 11. In some examples, a barcode may not be attached to certain types of merchandise such as fresh food items. If a barcode is not attached to the item, the clerk 21 selects a merchandise button corresponding to the item from the merchandise button group displayed on the touch panel 38. After the merchandise button is touched, the merchandise code corresponding to the merchandise button is input to the registration machine 11.

After the merchandise code is input, the processor 31 determines YES in ACT 2 and proceeds to ACT 3. The processor 31 executes the merchandise sales data processing as ACT 3. That is, the processor 31 acquires merchandise data such as a merchandise name, a unit price, and an attribute from the merchandise record of the merchandise corresponding to the merchandise code input by the scanner 37 or the touch panel 38. Then, the processor 31 registers the merchandise sales data including the items of information such as the merchandise code, the merchandise name, the unit price, the number of items sold, the sales amount, and the attributes in the transaction memory. The transaction memory is a portion of the volatile memory area in the main memory 32.

The processor 31 which has completed the merchandise sales data processing checks whether or not the subtotal button BTa is selected as ACT 4.

The clerk repeatedly performs an operation for inputting the merchandise code of the items being purchased by the customer 22 until no items remain unregistered. Then, after the merchandise codes of all the items have been input, the subtotal button BTa is selected.

If the subtotal button BTa is not selected and the merchandise code of the next item in the transaction is input, the processor 31 determines NO in ACT 4, YES in ACT 2, and proceeds again to ACT 3. As a result, the merchandise sales data for the purchased merchandise is registered in the transaction memory.

If the subtotal button BTa is selected, the processor 31 determines YES in ACT 4 and proceeds to ACT 5. The processor 31 displays a subtotal screen SCb (refer to FIG. 12) as ACT 5.

FIG. 12 is an example of the subtotal screen SCb. The subtotal screen SCb is a screen in which a total area ARc is arranged, and icons of a subtotal amount reduction button BTb, a subtotal discount button BTc, a return button BTd, and a payment button BTe are arranged. The total area ARc is the same as the total area ARb of the registration screen SCa. The subtotal amount reduction button BTb and the subtotal discount button BTc are operators that can be selected by the clerk 21 to perform an amount reduction or apply a discount on the total amount due. The return button BTd is an operator that can be selected by the clerk 21 to return to the immediately preceding registration screen SCa. The payment button BTe is an operator that can be selected by the clerk 21 to request payment of the price due for the registered items (that is, finalize the registered item list).

The clerk 21 next selects the payment button BTe if the inputting of all the data of the items to be purchased is complete and there is no need for an amount reduction or discount. If performing the subtotal amount reduction or the subtotal discount, the clerk 21 selects the subtotal amount reduction button BTb or the subtotal discount button BTc. If the data input items still remains unfinished, the clerk 21 selects the return button BTd.

Referring back to FIG. 6, the processor 31 controlling the display of the subtotal screen SCb checks whether or not the return button BTd has been selected as ACT 6. If the return button BTd is not selected, the processor 31 determines NO in ACT 6 and proceeds to ACT 7. The processor 31 checks whether or not the payment button BTe has been selected input as ACT 7. If the payment button BTe is not selected, the processor 31 determines NO in ACT 7 and returns to ACT 6. Herein, the processor 31 waits for the return button BTd to be selected or waits for the payment button BTe to be selected in ACT 6 or ACT 7. It is noted that, if the subtotal amount reduction button BTb or the subtotal discount button BTc is selected from this waiting (standby) state, the processor 31 can perform the subtotal amount reduction processing or the subtotal discount processing. After such processing, the processor 31 returns to the standby state of ACT 6 and ACT 7.

In the standby state of ACT 6 and ACT 7, if the return button BTd is selected by the clerk 21, the processor 31 determines YES in ACT 6 and returns to ACT 1. That is, the processor 31 returns the screen of the touch panel 38 back to the registration screen SCa. Then, the processor 31 executes the processing after ACT 2 in the same manner as described above.

If the payment button BTe is selected by the clerk 21 from the standby state of ACT 6 and ACT 7, the processor 31 determines YES in ACT 7 and proceeds to ACT 8. The processor 31 generates the transaction file as ACT 8. That is, the processor 31 generates the transaction file describing the settlement information 511 required for the settlement of the transaction from the merchandise sales data for each item of merchandise registered in the transaction memory, the data of the total number of items and the total amount, the data that can identify the transaction such as a transaction number, transaction date and time, and a registration machine ID. Then, the processor 31 stores the transaction file in the transaction file storage area 51 of the storage section 331 as ACT 9. In this example, the processor 31 realizes the function of the generation unit 311 by the processing of ACT 8. The processor 31 realizes the function of the storage unit 312 by the processing of ACT 9.

The processor 31 then waits for a settlement enable command as ACT 10. The settlement enable command is provided via the network 14 by the one of the checkout machines 12 capable of executing the settlement processing. The settlement enable command includes the checkout machine ID of the checkout machine 12 that is capable of executing the settlement processing.

The processor 31 which has received the settlement enable command determines YES in ACT 10 proceeds to ACT 11. The processor 31 identifies the checkout machine 12 corresponding to the checkout machine ID included in the settlement enable command as the checkout destination in ACT 11. For example, the processor 31 causes the touch panel 38 to display the checkout destination notification screen illustrating the particular checkout machine ID. A checking button icon can be displayed on the checkout destination notification screen.

The clerk 21 instructs the customer 22 to perform a settlement using the checkout machine 12 identified by the checkout machine ID and then presses the checking button. The customer 22 then moves to the instructed checkout machine 12 and performs the settlement of the transaction.

The processor 31 waits for the checking button to be pressed as ACT 12. After the checking button is pressed, the processor 31 determines YES in ACT 12 and completes the first information processing illustrated in FIG. 6.

The second information processing procedure executed by the processor 61 of a checkout machine 12 will be described. This procedure is common to the master machine 12-1 and the satellite machine 12-2.

As illustrated in FIG. 7, the processor 61 waits for a certain time (n seconds) to elapse as ACT 21. In this context, value of "n seconds" is an arbitrarily selectable time that has been set by the system administrator or the like. The selected length of time is not particularly limited, but is preferably around 5 seconds in most situations.

When the n seconds elapse, the processor 61 determines YES in ACT 21 and proceeds to ACT 22. The processor 61 acquires the current time tracked by the clock 64 as ACT 22 and records the current time in the corresponding operation information recording area 52 (in the storage section 331 of the registration machine 11 in the same checkout lane as the checkout machine 12). A master machine 12-1 (with "IDx") records the current time in the operation information recording area 52-1, and a satellite machine 12-2 (with "IDy") records the current time in the operation information recording area 52-2. Therefore, if the master machine 12-1 is operating normally, the operation information in the operation information recording area 52-1 is updated every n second. Similarly, if the satellite machine 12-2 is operating normally, the operation information in the operation information recording area 52-2 is updated every n second. The processor 61 realizes the function of the recording unit 616 in the processing of ACT 22.

The processor 61 examines the mode flag MF as ACT 23. If the mode flag MF is "1" (set as the master machine 12-1), the processor 61 determines YES in ACT 23 and proceeds to ACT 29. The processor 61 executes the master processing as ACT 29. In this manner, the master machine 12-1 executes the process of updating the operation information of the operation information recording area 52-1 at time intervals of n seconds and also executes the master processing.

If the mode flag MF is "0" (set as satellite machine 12-2), the processor 61 determines NO in ACT 23 and proceeds to ACT 24. The processor 61 examines the busy flag BF as ACT 24. If the busy flag BF is "1" (settlement processing is in progress), the processor 61 determines YES in ACT 24 and returns to the processing of ACT 21. In this manner, a satellite machine 12-2 in the busy state during the settlement processing only performs the processing of updating the operation information in the operation information recording area 52-2 at time intervals of n seconds.

If the busy flag BF is "0" (settlement processing is not in progress), the processor 61 determines NO in ACT 24 and proceeds to ACT 25. The processor 61 acquires the operation information from the operation information recording area 52-1 as updated by the master machine 12-1 in ACT 25. The processor 61 checks whether or not the operation information recorded time is within n seconds of the current time as ACT 26. If the time is within n seconds, the master machine 12-1 is operating normally. The processor 61 determines YES in ACT 26 and proceeds to ACT 27. The processor 61 executes satellite processing as ACT 27.

On the other hand, if the operation information recorded time is not still within n seconds of the current time, it is estimated that the master machine 12-1 is not operating normally. The processor 61 determines NO in ACT 26 and proceeds to ACT 28. The processor 61 then executes the master processing as ACT 28.

In this manner, the satellite machine 12-2 in the idle state performs the processing of updating the operation information in the operation information recording area 52-2 at time intervals of n seconds. Furthermore, the satellite machine 12-2 monitors whether or not the master machine 12-1 is operating normally at each of the time intervals of n seconds. Then, if the master machine 12-1 is operating normally, the satellite machine 12-2 executes the satellite processing, but if the master machine 12-1 is not operating normally, the satellite machine 12-2 executes the master processing itself instead of the master machine 12-1.

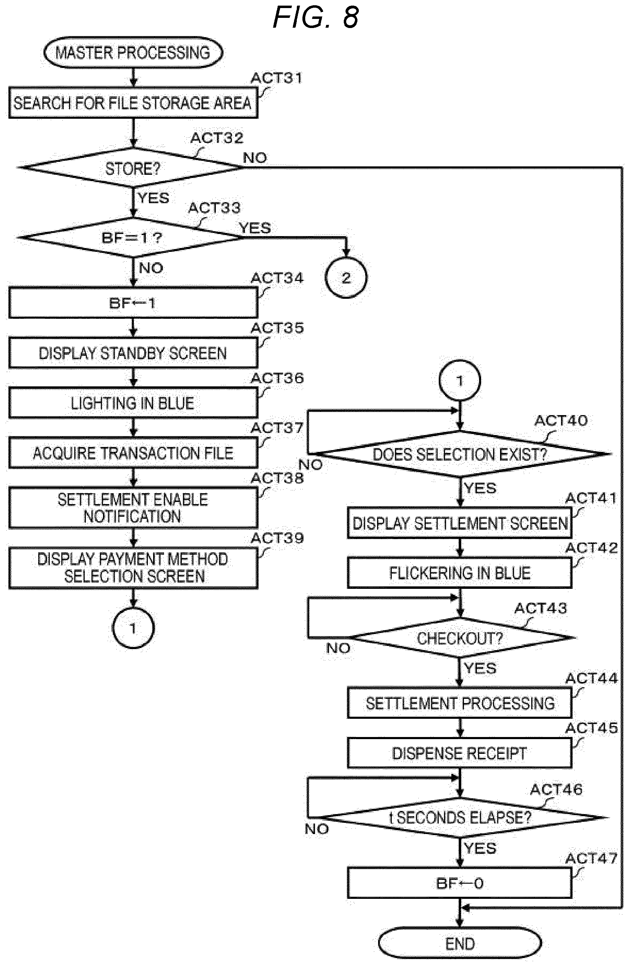

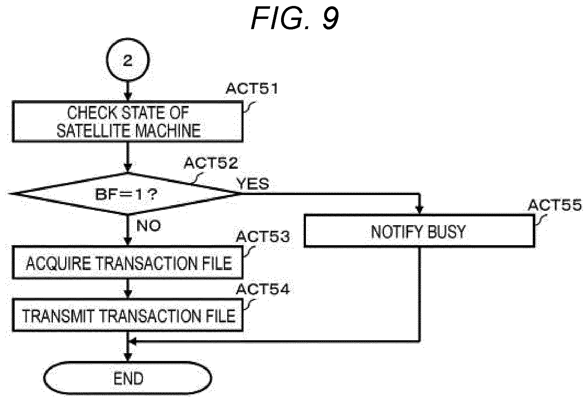

FIGS. 8 and 9 are flowcharts illustrating the master processing procedure. The processor 61 searches for the transaction file storage area 51 of the registration machine 11 arranged in the same checkout lane as ACT 31. The processor 61 checks whether or not the transaction file is stored in the transaction file storage area 51 as ACT 32. If the transaction file is not stored, the processor 61 determines NO in ACT 32 and completes the master processing.

If the transaction file is stored in the transaction file storage area 51, the processor 61 determines YES in ACT 32 and proceeds to ACT 33. The processor 61 examines the busy flag BF as ACT 33.

If the busy flag BF is "0" (idle state), the settlement processing is enabled by the checkout machine 12. The processor 61 changes the busy flag BF to "1" as ACT 34. Furthermore, the processor 61 sets the screen of the touch panel 68 as the standby screen as ACT 35. The standby screen is a screen that displays a message such as "please wait for a while" and instructs the customer 22 to wait for the next operation. The processor 61 also lights the patrol lamp 71 in blue as ACT 35.

After the processing of ACT 34 to ACT 36 is completed, the processor 61 acquires the transaction file from the transaction file storage area 51 of the registration machine 11 as ACT 37. At this time, if a plurality of transaction files are stored in the transaction file storage area 51, the oldest stored transaction file can be acquired. By this processing, the transaction file is transmitted via the network 14 from the registration machine 11 to the checkout machine 12 in which the master processing is presently being executed. The transaction file transmitted to the checkout machine 12 is cleared from the transaction file storage area 51.

The processor 61 receiving the transaction file then notifies the registration machine 11 of the settlement enable command as ACT 38. The settlement enable command is transmitted from the checkout machine 12 to the registration machine 11 via the network 14. The settlement enable command includes the checkout machine ID of the checkout machine 12. As a result, in the registration machine 11, the checkout machine 12 identified by the checkout machine ID (the checkout machine 12 in which the master processing is being executed) is identified as the checkout destination.

The processor 61 which sent the settlement enable command updates the screen of the touch panel 68 to a payment method selection screen SCc as ACT 39 (refer to FIG. 13).

FIG. 13 is an example of the payment method selection screen SCc. The payment method selection screen SCc is a screen in which a total area ARd is arranged, and icons of a cash button BTf, a credit button BTg, an electronic money button BTh, and a clerk call button BTi are further arranged. The total area ARd is an area for displaying the total number of items and the total amount included in the transaction file acquired from the registration machine 11. The cash button BTf is an operator pressed by the customer 22 who selects cash as a payment method. The credit button BTg is an operator pressed by the customer 22 who selects a credit card as a payment method. The electronic money button BTh is an operator pressed by the customer 22 who selects electronic money as a payment method. The clerk call button BTi is an operator that can be pressed by the customer 22 to call a clerk.

The cash button BTf, the credit button BTg, and the electronic money button BTh may individually or collectively be referred to as a selection unit for selecting a payment method. It is noted that the possible payment methods are not limited to these three types (cash, credit card and electronic money). And in some examples fewer than these three examples may be available. It is noted that, for example, there may be only one payment method that is available. In that case, instead of the cash button BTf, the credit button BTg, and the electronic money button BTh, an operator for instructing the settlement start, for example, the icon of the settlement start button may be displayed on the payment method selection screen SCc.

The customer 22 for whom the master machine 12-1 is designated as the checkout destination by the clerk 21, moves to the master machine 12-1. Then, if the payment method selection screen SCc is displayed on the touch panel 68 of the master machine 12-1, the button corresponding to the desired payment method is selected. That is, a customer who desires to pay by cash selects the cash button BTf, a customer who desires to pay by credit card selects the credit button BTg, and a customer who desires to pay by electronic money selects the electronic money button BTh.

The processor 61 controlling the display of the payment method selection screen SCc waits for one of the payment methods to be selected as ACT 40. Then, after the payment method is selected, the processor 61 determines YES in ACT 40 and proceeds to ACT 41. The processor 61 updates the screen of the touch panel 68 to a settlement screen SCd as ACT 41 (refer to FIG. 14). Furthermore, the processor 61 flickers or flashes the patrol lamp 71 in blue as ACT 42.

FIG. 14 is the settlement screen SCd if cash is selected as the payment method. The settlement screen SCd is a screen in which a display area ARe of the total amount, the input amount, and the change amount is arranged, and icons of a checkout button BTj, a return button BTk, and a clerk call button BTI are further arranged. It is noted that, although not specifically illustrated, the checkout button BTj, the return button BTk, and the clerk call button BTI icons can also be arranged on the settlement screen if a credit card or electronic money payment method is selected.

The customer 22 who declared to pay by cash by selecting the cash button BTf selects the checkout button BTj after inserting a cash equal to the total amount or more into the automatic change machine. The customer 22 who desires to change to a payment method to other than cash at this point selects the return button BTk. If calling the clerk, the customer 22 selects the clerk call button BTl. If the return button BTk is pressed, the screen of the touch panel 68 returns to the payment method selection screen SCc.

The processor 61 after ACT 41 and ACT 42 waits for the checkout button BTj to be selected as ACT 43. Then, after the checkout button BTj is selected, the processor 61 determines YES in ACT 43 and proceeds to ACT 44. The processor 61 executes the settlement processing as ACT 44. For example, if cash is selected as the payment method, the processor 61 executes the process of deducting the total amount from the amount inserted into the automatic change machine, calculating the change due, and paying out the change due from the automatic change machine. For example, if a credit card is selected as the payment method, the processor 61 performs authentication of the credit card after it has been read by the reader and writer 70, and determines the total amount as the credit settlement amount on condition of being approved by the server 13. For example, if electronic money is selected as the payment method, the processor 61 subtracts the total amount from the balance of the electronic money medium that was read by the reader and writer 70.

In this manner, after the settlement processing with the selected payment method is completed, the processor 61 controls the printer 69 as ACT 45 and dispenses a transaction receipt. The transaction receipt is printed with the settlement information 511, that is, the transaction number, the transaction date and time, the registration machine ID, the merchandise sales data, the total number of items, the total amount, and the like.

The processor 61 controlling the dispensation of the transaction receipt waits for t seconds to elapse as ACT 46. In this example, the value for t seconds is set to correspond to an estimated time required for the customer 22 who received the transaction receipt to leave the checkout machine 12. The value for t seconds can be a freely selected by the system administrator, and is preferably around 10 seconds in the present embodiment.

When t seconds elapse, the processor 61 determines YES in ACT 46 and proceeds to ACT 47. The processor 61 returns the busy flag BF to "0" as ACT 47. With the above, the processor 61 completes the master processing.

In this manner, the checkout machine 12 that executes the master processing checks at time intervals of n seconds whether or not the transaction file is stored in the transaction file storage area 51 of the registration machine 11 arranged in the same checkout lane. Then, if the transaction file is stored and the checkout machine 12 is available for executing the settlement processing, the settlement information is acquired from the transaction file storage area 51, and the settlement processing is executed based on the settlement information.

The processor 61 realizes the functions of the first check unit 611 in the processing of ACT 31 and ACT 32. Furthermore, the processor 61 realizes the functions of the settlement unit 612 in the processing of ACT 33 to ACT 45.

In ACT 33, if the checkout machine 12 has busy flag BF of "1" (busy state), then the checkout machine 12 cannot perform new settlement processing. In this case, the processor 61 proceeds to ACT 51 of FIG. 9. The processor 61 checks the state of the satellite machine 12-2 arranged in the same checkout lane as ACT 51. The processor 61 checks whether or not the busy flag BF of the satellite machine 12-2 is "1" as ACT 52.

If the busy flag BF is "0", that is, the satellite machine 12-2 is in the idle state and the settlement processing can be executed, the processor 61 determines YES in ACT 52 and proceeds to ACT 53. The processor 61 acquires the transaction file from the transaction file storage area 51 of the registration machine 11 as ACT 53. At this time, if a plurality of transaction files are stored in the transaction file storage area 51, the oldest stored transaction file is acquired. By this processing, the transaction file is transmitted via the network 14 from the registration machine 11 to the checkout machine 12 in which the master processing is being executed. The transaction file transmitted to the checkout machine 12 is cleared from the transaction file storage area 51.

The processor 61 then transmits the transaction file to the satellite machine 12-2 whose state was checked, that is, the satellite machine 12-2 in which the settlement processing is enabled as ACT 54. With the above, the processor 61 completes the master processing.

By the processing of ACT 54, the transaction file is transmitted via the network 14 from the checkout machine 12 that executes the master processing to the satellite machine 12-2 whose state was checked.

In this manner, the checkout machine 12 that executes the master processing checks whether or not the transaction file is stored in the transaction file storage area 51 of the registration machine 11 arranged in the same checkout lane at time intervals of n seconds. Then, if the transaction file is stored but the checkout machine 12 is not in a state capable of executing the settlement processing (e.g., the checkout machine 12 is busy or otherwise unavailable), the settlement information is acquired from the transaction file storage area 51, and the settlement information is transmitted to a free (available) checkout machine 12, that is, the satellite machine 12-2.

The processor 61 realizes the functions of as the second check unit 614 in the processing of ACT 51 and ACT 52. Furthermore, the processor 61 realizes the functions of the transmission unit 613 in the processing of ACT 53 and ACT 54.

If the busy flag BF is "1" in ACT 52, that is, the satellite machine 12-2 is in the busy state, then neither the master machine 12-1 or the satellite machine 2 can perform the settlement processing at this time. In this case, the processor 61 proceeds to ACT 55. The processor 61 sends the registration machine 11 in the same checkout lane a busy response command notifying that the settlement processing is not enabled at the moment. With the above, the processor 61 completes the master processing.

By the processing of ACT 55, the busy response command is transmitted to the registration machine 11 through the network 14. In the registration machine 11 receiving the busy response command, a message for notifying the clerk 21 that the checkout machines 12 are busy is displayed on a portion of the screen of the touch panel 38.

In this manner, the checkout machine 12 that executes the master processing checks whether or not the transaction file is stored in the transaction file storage area 51 of the registration machine 11 arranged in the same checkout lane at time intervals of n seconds. If the transaction file is stored but the checkout machines 12 are not capable of executing the settlement processing, the settlement information is not acquired from the transaction file storage area 51. The checkout machine 12 executing the master processing transmits the busy response command to the registration machine 11 to notify that the settlement processing cannot be executed.

The processor 61 realizes the functions of the notification unit 615 in the processing of ACT 55.

As described above, the master processing may be executed not only by the master machine 12-1 but also by the satellite machine 12-2. If there is only one satellite machine 12-2, there may be no other satellite machine 12-2 whose state is to be checked in ACT 51. In that case, the processor 61 completes the master processing without executing the processing of ACT 51 to ACT 55.

If there are two or more satellite machines 12-2, the priority order can be set for each satellite machine 12-2. Then, if the satellite machine 12-2 having a higher priority executes the master processing, the state of the satellite machine 12-2 having a lower priority may be checked in ACT 51.

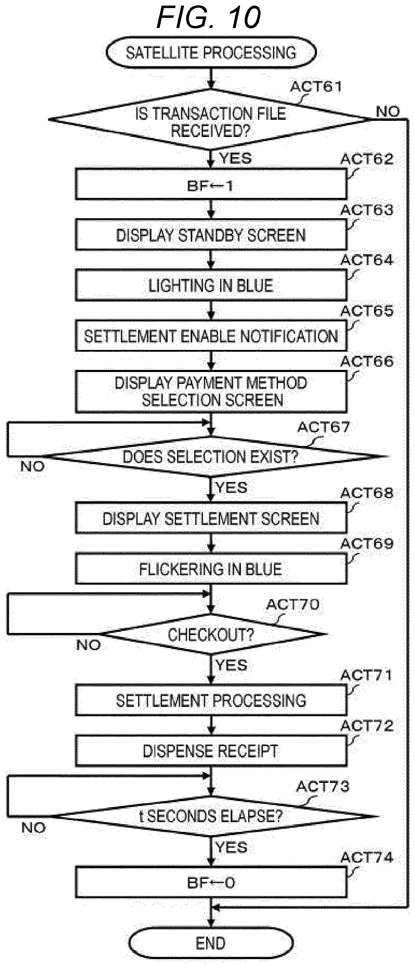

FIG. 10 is a flowchart illustrating a satellite processing procedure. The processor 61 checks whether or not the transaction file is received as ACT 61. As described above, if the checkout machine 12 executing the master processing is in the busy state and the settlement processing cannot be executed, the transaction file stored in the registration machine 11 is transferred to the satellite machine 12-2 via the checkout machine 12-1 during the master processing execution.

If the transaction file is not received, the processor 61 determines NO in ACT 61 and completes the satellite processing.

If the transaction file is received, the processor 61 determines YES in ACT 61 and proceeds to ACT 62. Then, the processor 61 executes the same processing as the processing of ACT 34 to ACT 36 described in the master processing as ACT 62 to ACT 64. That is, the processor 61 changes the busy flag BF to "1" as ACT 62, sets the screen of the touch panel 68 as the standby screen as ACT 63, and lights the patrol lamp 71 in blue as ACT 63.

After that, the processor 61 executes the same processing as the processing of ACT 38 to ACT 47 described in the master processing as ACT 65 to ACT 74. That is, the processor 61 notifies the registration machine 11 of the settlement enable command as ACT 65. As a result, in the registration machine 11, the satellite machine 12-2 is identified as the checkout destination.

The processor 61 which sent the settlement enable command updates the screen of the touch panel 68 to the payment method selection screen SCc as ACT 66 (refer to FIG. 13). Then, the processor 61 waits for one of the payment methods to be selected as ACT 67. After the payment method is selected, the processor 61 updates the screen of the touch panel 68 to the settlement screen SCd as ACT 68 (refer to FIG. 14). Further, the processor 61 flashes the patrol lamp 71 in blue as ACT 69.

The processor 61 waits for the checkout button BTj to be selected as ACT 70. If the checkout button BTj is selected, the processor 61 executes the settlement processing as ACT 71. Then, after the settlement processing is completed, the processor 61 controls the printer 40 as ACT 72 and dispenses a transaction receipt. After dispensing the transaction receipt, the processor 61 waits for t seconds to elapse as ACT 73. Then, after t seconds elapses, the processor 61 returns the busy flag BF to "0" as ACT 74. With the above, the processor 61 completes the satellite processing.

As described above, in the transaction processing system 10 according to the present embodiment, the settlement information of the transaction file generated by the registration machine 11 is transmitted to a checkout machine 12 only if the master machine 12-1 can execute the settlement processing or a satellite machine 12-2 can execute the settlement processing. Therefore, the transmission of the settlement information is not wasted. Therefore, the transaction processing system 10 that allows the checkout machines 12 to efficiently acquire the settlement information required for the settlement of the transaction, the registration machine 11 and the checkout machines 12 used in the transaction processing system 10, and the registration program for the registration machine 11 and the settlement program for the checkout machine 12 can be provided.

If neither the master machine 12-1 nor the satellite machine 12-2 can process the settlement, a busy response command is transmitted to the registration machine 11. After that, for example, if the busy flag BF becomes "0" in the master machine 12-1 and the settlement is enabled, the master machine 12-1 acquires the settlement information from the registration machine 11 and executes the settlement processing. Furthermore, if the busy flag BF becomes "0" in the satellite machine 12-2 and the settlement is enabled before the master machine 12-1, the master machine 12-1 acquires the settlement information from the registration machine 11 and sends the settlement information to satellite machine 12-2. As a result, the satellite machine 12-2 executes the settlement processing. Therefore, even if the master machine 12-1 and the satellite machine 12-2 are in the busy state, the settlement processing can be performed promptly once the busy state is resolved, so that the transaction can be settled efficiently.

Furthermore, if a failure occurs in the master machine 12-1 and the operation information cannot be updated, the satellite machine 12-2 executes the master processing in place of the master machine 12-1. Therefore, even if the master machine 12-1 is in disorder, there is no concern that the settlement will be unnecessarily delayed.

Although an example embodiment of the transaction processing system 10 is described above, the possible embodiments are not limited thereto.

The number of checkout machines 12 arranged in each checkout lane is not limited to two. The number of checkout machines 12 may be three or more. In that case, one checkout machine 12 becomes the master machine 12-1, and the other checkout machines 12 become satellite machines 12-2.

The storage section 331 does not have to be in the auxiliary storage device 33 of the registration machine 11. For example, a portion of the RAM area in the main memory 32 of the registration machine 11 may be used as the area of the storage section 331. Furthermore, a storage section 331 can be formed for each registration machine 11 connected to the network 14 for the storage device of the server 13, and each registration machine 11 may store the transaction file in the transaction file storage area 51 of the storage section 331 assigned to the registration machine 11 itself.

The operation information is not limited to the current time information. For example, the checkout machine 12 may record the count value of the counter that increments up every n second as the operation information in the operation information recording area 52 of the registration machine 11.

In an embodiment, one of the two checkout machines 12 is set as the master machine 12-1, and the other is set as the satellite machine 12-2. In another embodiment, the two checkout machines 12 both execute the master processing. At that time, one checkout machine (hereinafter referred to as checkout machine 12-3) executes the master processing at 10-second time intervals beginning from a zero point. The other checkout machine (hereinafter referred to as checkout machine 12-4) also executes the master processing at 10-second time intervals but offset from the zero point, for example, starting at 5 seconds after the zero point, then every 10 seconds thereafter: 15 seconds, 25 seconds, 35 seconds, 45 seconds, and 55 seconds.

By doing so, if the transaction file is stored in the transaction file storage area 51 and the checkout machine 12-3 can execute the settlement processing if the checkout machine 12-3 executes the master processing, the checkout machine 12-3 acquires the transaction file and performs the settlement processing. If the checkout machine 12-3 cannot execute the settlement processing but the other checkout machine 12-4 can execute the settlement processing, the checkout machine 12-3 acquires the transaction file and transmits the transaction file to the other checkout machine 12-4, and the other checkout machine 12-4 performs the settlement processing. Similarly, if the transaction file is stored in the transaction file storage area 51 and the checkout machine 12-4 can execute the settlement processing if the checkout machine 12-4 executes the master processing, the checkout machine 12-4 acquires the transaction file and performs the settlement processing. If the checkout machine 12-4 cannot execute the settlement processing but the other checkout machine 12-3 can execute the settlement processing, the checkout machine 12-4 acquires the transaction file and transmits the transaction file to the other checkout machine 12-3, and the other checkout machine 12-3 performs the settlement processing. Herein, the time interval at which the master processing is executed by the checkout machine 12-3 or the checkout machine 12-4 is 5 seconds. Therefore, the same action and effect as in the case where n seconds is set to 5 seconds can be obtained.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A merchandise sales transaction processing system (10), comprising:
a merchandise registration processing device (11) configured to:
register items being purchased in a sales transaction,
generate settlement information for the sales transaction based on the registered items, and
store the generated settlement information for the sales transaction in a storage device; and
a plurality of settlement devices (12) associated with the merchandise registration processing device, each of the settlement devices configured to:
check for settlement information for a sales transaction in the storage device,
acquire the settlement information for the sales transaction if the settlement information is stored in the storage device and at least one of the settlement devices is available for executing settlement processing based on the settlement information,
execute the settlement processing if the settlement device acquiring the settlement information is available, and
transmit the acquired settlement information to an available one of the settlement devices if the settlement device acquiring the settlement information is unavailable.

2. The system according to claim 1, wherein each of the settlement devices is further configured to notify the merchandise registration processing device if the settlement information for a transaction is stored in the storage device but none of the plurality of settlement devices are presently available for settlement processing.

3. The system according to claim 1 or 2, wherein each of the settlement devices is further configured to store status information in the storage device at regular intervals.

4. The system according to claim 3, wherein the status information is a clock time corresponding to when the status information is stored in the storage device.

5. The system according to claim 3 or 4, wherein the regular intervals for each of the settlement devices are the same length of time.

6. The system according to any one of claims 3 to 5, wherein at least one of the settlement devices has a zero point for its regular intervals that is offset in time from at least one other settlement device.

7. The system according to any one of claims 1 to 6, wherein the storage device is in the merchandise registration processing device.

8. The system according to any one of claims 1 to 7, wherein
each of the settlement devices includes a lamp, and
each of the settlement devices is configured to light the lamp to indicate a standby state after the transaction settlement information has been acquired by the settlement device.

9. A settlement device configured to be used for the merchandise sales transaction processing system according to any one of claims 1 to 8, the settlement device comprising:
a communication interface configured to connect to the merchandise registration processing device and at least one other settlement device via a network (14).

10. A non-transitory computer-readable medium storing program instruction which when executed cause a settlement device in a merchandise transaction settlement system perform a method comprising:
checking for settlement information for a sales transaction in a storage device;
acquiring the settlement information for the sales transaction if the settlement information is stored in the storage device and at least one of settlement device in the merchandise transaction processing system is available for executing settlement processing based on the settlement information,
executing the settlement processing based on the acquired settlement information if the settlement device itself is available, and
transmitting the acquired settlement information to another settlement devices if the settlement device acquiring the settlement information is unavailable and the other settlement device is available.

11. The non-transitory computer-readable medium according to claim 10, the method further comprising:
notifying the merchandise registration processing device if the settlement information for a transaction is stored in the storage device but no settlement device is presently available for settlement processing.

12. The non-transitory computer-readable medium according to claim 10 or 11, the method further comprising storing status information in the storage device at regular intervals.

13. The non-transitory computer-readable medium according to claim 12, wherein the status information is a clock time corresponding to when the status information is stored in the storage device.

14. The non-transitory computer-readable medium according to any one of claims 10 to 13, the method further comprising lighting a lamp to indicate a standby state or displaying a standby screen after the transaction information has been acquired.

15. The non-transitory computer-readable medium according to any one of claims 10 to 14, the method further comprising performing settlement processing based on the acquired settlement information.
